# FASCICULE DE BREVET EUROPEEN

(11) **EP 4 019 707 B1**
(45) Date de publication et mention de la délivrance du brevet: **17.07.2024**
(21) Numéro de dépôt: 21215876.0
(22) Date de dépôt: 20.12.2021
(51) Int. Cl.: E04C 2/24, E04B 2/74, E04B 2/80, E04B 1/10, E04B 2/70, B32B 3/10, B32B 7/12, E04C 2/52, E04C 2/38, B32B 5/18, B32B 9/02, B32B 21/04, E04C 2/12, E04C 2/42

(54) **PANNEAU EN BOIS PRÉFABRIQUÉ POUR LA CONSTRUCTION DE BÂTIMENTS**
VORGEFERTIGTE HOLZPLATTE FÜR DEN BAU VON GEBÄUDEN
PREFABRICATED WOOD PANEL FOR THE CONSTRUCTION OF BUILDINGS

(30) Priorité: 24.12.2020 FR 2014118
(43) Date de publication de la demande: 29.06.2022
(73) Titulaire: Durand, Léopold, 38300 Saint-Savin (FR)
(72) Inventeur: DURAND, Léopold, 38300 SAINT-SAVIN (FR)
(74) Mandataire: Cabinet Laurent & Charras

(56) Documents cités:
- EP-A1- 3 561 194
- DE-U1- 20 216 634
- US-A1- 2003 167 714
- US-A1- 2010 021 674

## Description

### Domaine technique :

La présente invention concerne un panneau en bois préfabriqué pour la construction de bâtiments, ledit panneau comportant une structure multicouche assemblée par collage sous presse.

### Technique antérieure :

Le bâtiment et la construction en général doivent faire face à des problèmes récurrents de manque de main d'oeuvre qualifiée et de manque de qualité dans les ouvrages réalisés. Pour pallier ces problèmes, les acteurs du marché utilisent de plus en plus des éléments de construction préfabriqués en atelier. La préfabrication en atelier permet en effet de maîtriser les procédés de fabrication, qui peuvent être facilement automatisés, et de garantir ainsi la qualité et la reproductibilité des produits fabriqués. Il en résulte sur le chantier une rationalisation de la main d'oeuvre, une meilleure coordination des corps de métiers, réduisant ainsi la durée et les coûts de construction.

Dans le domaine plus spécifique de la construction bois, il existe des panneaux préfabriqués en atelier, comme ceux décrits par exemple dans les publications EP0560013, EP2220305 etDE20216634U1. Ils sont formés d'une pluralité de couches de lames de bois, non jointives, entrecroisées c'est-à-dire que les lames de bois de deux couches consécutives sont orientées dans des directions différentes, et notamment perpendiculaires. Ce type de panneaux permet la création d'interstices intérieurs en forme de chicane qui peuvent être laissés vides pour passer les gaines techniques, ou comblés de matière isolante pour apporter une isolation thermique et/ou phonique. Néanmoins, les panneaux de ce type ne constituent pas en tant que tels des produits complets, finis, prêts à poser. Ils doivent être complétés en usine et/ou sur chantier avec des produits complémentaires de type bardage, contreventement, pare-vapeur, isolation, finition, etc. pour apporter les fonctionnalités qui leur manquent en fonction de la règlementation en vigueur. Ces interventions pénalisent le coût et la durée du chantier, ainsi que la qualité finale de la construction.

On connaît par ailleurs des publications EP2733276, EP 3 561 194 et CN108374499 l'utilisation dans le domaine de la construction de panneaux en bois pleins, massifs et contrecollés, fabriqués selon une technique dite « lamellé-collé-croisé » plus connue sous le sigle « CLT » (Cross Laminated Timber).

Un panneau en CLT est un panneau multicouche constitué de 3 à 11 couches de lamelles ou lames de bois (en général des planches d'une trentaine de millimètres d'épaisseur) collées entre elles. Le nombre de couches ou plis est généralement un nombre impair. Chaque couche contient des lamelles disposées dans un seul sens. Les couches sont croisées à 90 degrés et collées entre elles, ceci afin d'augmenter la rigidité et la stabilité des panneaux dans toutes les directions. Ainsi, les panneaux CLT sont connus pour leur légèreté et leur excellente résistance mécanique leur permettant de supporter une forte capacité de charge. A titre d'exemple, ils ont des performances mécaniques équivalentes à celles du béton armé, mais en étant quatre fois plus légers que le béton. Ainsi, ils peuvent être avantageusement utilisés comme élément de structure ou élément porteur dans des bâtiments, en substitution du béton ou de l'acier. Ils présentent en outre une grande résistance thermique et acoustique, ainsi qu'une capacité de régulation de l'humidité ambiante et d'absorption des substances nocives. Ce matériau de construction présente en outre un bilan carbone positif, qui en fait une solution constructive écoresponsable et saine. A titre d'exemple, 1 m³ de CLT permet le prélèvement d'environ 930 kg de CO₂.

Toutefois, ce matériau de construction nécessite plusieurs plis, d'où une grande quantité de bois pour atteindre ses performances optimales. En outre, il n'est jamais utilisé seul et est toujours complété en usine et/ou sur chantier avec de l'isolation thermique par l'extérieur (ITE), un pare-pluie, un bardage, etc. pour atteindre les performances imposées par la règlementation en vigueur. Enfin, la conception massive des panneaux CLT n'autorise pas le passage des gaines techniques. Cette contrainte impose là encore des travaux complémentaires en usine et/ou sur chantier pour usiner des rainures dans les panneaux et/ou ajouter des caissons ou un parement pour ménager un vide technique intérieur. Ce matériau de construction atteint par conséquent un prix de vente au mètre carré relativement élevé. En outre, les interventions additionnelles pénalisent le coût et la durée du chantier, ainsi que la qualité finale de la construction.

A ce jour, il n'existe pas d'éléments de construction préfabriqués industriellement qui soient des produits complets, finis, prêts à poser et à assembler sur chantier, ne nécessitant que peu d'interventions sur chantier.

### Présentation de l'invention :

La présente invention vise à pallier ces inconvénients en proposant un panneau en bois préfabriqué en usine, complet, fini, prêt à poser sur chantier, intégrant tous les éléments qui composent une paroi, ces éléments étant assemblés en une seule fois afin de limiter au maximum les interventions une fois le panneau mis en place sur chantier. L'invention vise également un panneau en bois préfabriqué léger et résistant, dimensionnellement stable, autoportant, qui intègre toutes les fonctionnalités de structure, de contreventement, de parement, de passage des réseaux, d'isolation thermique, d'isolation acoustique et d'esthétique, pouvant être utilisé comme élément de structure ou élément porteur dans une construction. L'invention vise aussi un panneau en bois réalisé en matériaux biosourcés 100% recyclable, et a faible empreinte carbone.

Ainsi l'invention vise un système constructif complet, simple, intégrant tous les besoins d'une construction (structure, réseaux, thermique, acoustique, esthétique) dans un unique panneau constructif conçu de manière standardisée et industrialisable, et pouvant être utilisé en mur extérieur, cloison intérieure, dalle de plancher, support de toiture, etc.

Dans ce but, l'invention concerne un panneau en bois préfabriqué, caractérisé en ce qu'il comporte dans l'ordre :
- une première couche constituée d'une plaque de bois massive,
- une deuxième couche constituée d'un matériau thermiquement isolant en forme de plaques ou de bandes plates, intercalé entre des lisses parallèles, s'étendant dans une première direction,
- une troisième couche constituée d'entretoises parallèles, s'étendant dans une seconde direction perpendiculaire à la première direction, pour créer des canaux entre les entretoises,
- une quatrième couche constituée d'un matériau thermiquement isolant en forme de plaques ou de bandes plates, intercalé entre des lisses parallèles s'étendant dans ladite première direction,
- une cinquième couche constituée d'une plaque de bois massive,
et en ce que les lisses de la deuxième couche et les lisses de la quatrième couche sont parallèles entre elles et décalées les unes par rapport selon ladite seconde direction pour éviter les ponts thermiques, lesdites première et cinquième couches sont agencées pour former la structure portante et le contreventement dudit panneau, lesdites deuxième et quatrième couches sont agencées pour former la structure isolante du panneau, et ladite troisième couche est agencée pour former le vide technique dudit panneau, lesdits canaux étant vides, traversants et agencés pour recevoir des réseaux techniques.

Ainsi, cette nouvelle conception de panneau en bois offre aux maîtres d'oeuvre un système constructif complet, réalisé industriellement, sans pont thermique et sans fixation mécanique, offrant toutes les garanties de qualité, de respect des normes en vigueur, de précision et de reproductibilité, ce système étant adapté à tout type de construction du pavillonnaire au collectif. En outre, cette nouvelle conception facilite l'accès au vide technique pendant toute la durée de vie du panneau, permet le passage des réseaux électriques directement en câblé, sans gaine plastique, les réseaux techniques restant accessibles tout au long de la construction et même après la construction.

Dans une forme préférée de l'invention, ladite première direction des lisses de la deuxième couche et de la quatrième couche correspond à une direction sensiblement horizontale, lorsque ledit panneau est disposé pour former un mur, et ladite seconde direction des entretoises de la troisième couche correspond à une direction sensiblement verticale.

De manière avantageuse, la plaque de bois de la première couche et la plaque de bois de la cinquième couche sont choisies chacune dans le groupe comprenant une planche de bois brute, une plaque d'OSB (Oriented Strand Board), une plaque de fibres de bois collées type AGEPAN^{®}, une plaque de particules de bois agglomérées, une plaque de bois lamellé-collé, et de préférence une plaque de bois lamellé-collé-croisé (CLT Cross Laminated Timber).

Le matériau thermiquement isolant de la deuxième couche et le matériau thermiquement isolant de la quatrième couche sont avantageusement choisis chacun dans le groupe comprenant la laine de bois, la laine de roche, le polystyrène extrudé, la mousse de polyuréthane, le liège, la combinaison d'au moins deux de ces matériaux.

Les lisses de la deuxième couche et les lisses de la quatrième couche, ainsi que les entretoises de la troisième couche sont agencées pour définir l'épaisseur respectivement desdites deuxième et quatrième couches et de la troisième couche. Dans ce but, elles sont choisies chacune dans le groupe comprenant des tasseaux de bois brut, de bois massif abouté, de bois contrecollé, de bois lamellé-collé. Les lisses et lesdites entretoises peuvent avoir une même section, ou une section différente dans chacune des deuxième, troisième et quatrième couches.

Le panneau selon l'invention peut comporter avantageusement au moins une ouverture choisie dans le groupe comprenant une fenêtre, une porte, une baie.

Dans le but fixé, l'invention concerne également un procédé de fabrication d'un panneau en bois préfabriqué dans lequel, sur une table de presse, l'on superpose les couches de ladite structure multicouche dans l'ordre de la première couche à la cinquième couche ou inversement de la cinquième couche à la première couche, l'on dépose de la colle sur chacune des couches avant de déposer la couche suivante, et l'on met sous pression la structure multicouche pour lier lesdites couches entre elles et former ledit panneau en bois préfabriqué, fini et prêt à poser.

De manière avantageuse, l'on peut découper ledit panneau obtenu après fabrication pour créer au moins une ouverture destinée à former une fenêtre, une porte, une baie.

Dans le but fixé, l'invention concerne en outre une construction obtenue par assemblage de plusieurs desdits panneaux en bois préfabriqués dans laquelle lesdits panneaux peuvent former tout ou partie des parois de ladite construction comprenant les murs extérieurs, les cloisons intérieures, les dalles de plancher, les supports de toiture, lesdits panneaux pouvant être assemblés entre eux par des tirefonds et des vis, ou tout moyen de fixation adéquat.

### Brève description des figures :

La présente invention et ses avantages apparaîtront mieux dans la description suivante de modes de réalisation donnés à titre d'exemples non limitatifs, en référence aux dessins annexés, dans lesquels:
- La figure 1 est une vue éclatée en perspective d'un panneau selon l'invention,

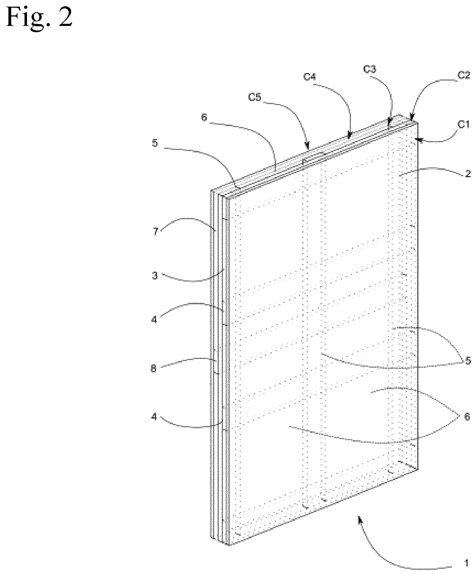

- La figure 2 est une vue en perspective du panneau de la figure 1 assemblé,

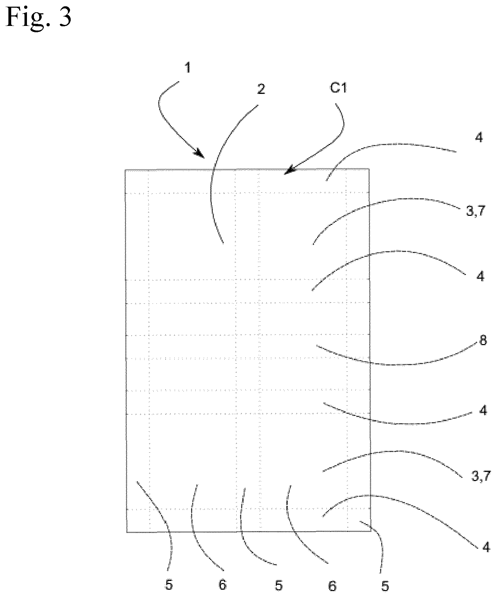

- La figure 3 est une vue en plan du panneau de la figure 2,

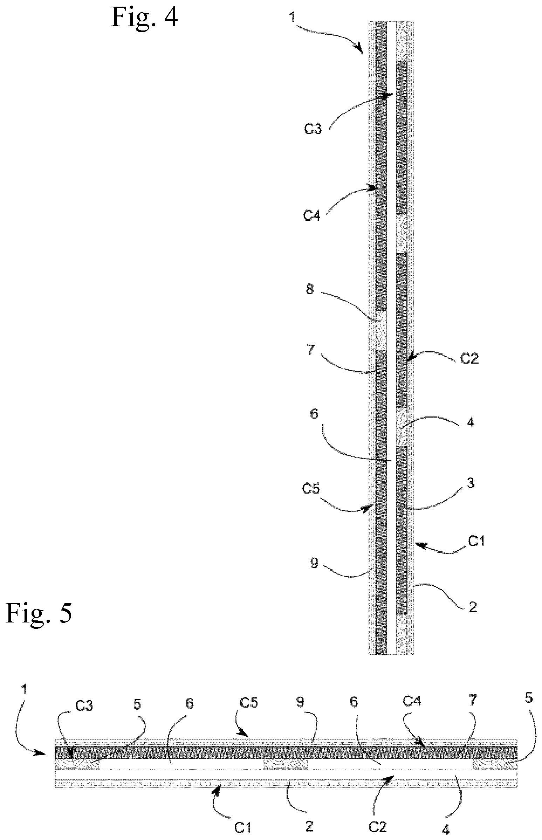

- La figure 4 est une vue de côté du panneau de la figure 3,
- La figure 5 est une vue de dessous du panneau de la figure 3,
- La figure 6 est une vue en perspective d'un assemblage en angle de deux panneaux selon l'invention, et
- La figure 7 est une vue en coupe transversale de l'assemblage en angle de la figure 6.

### Description détaillée de l'invention :

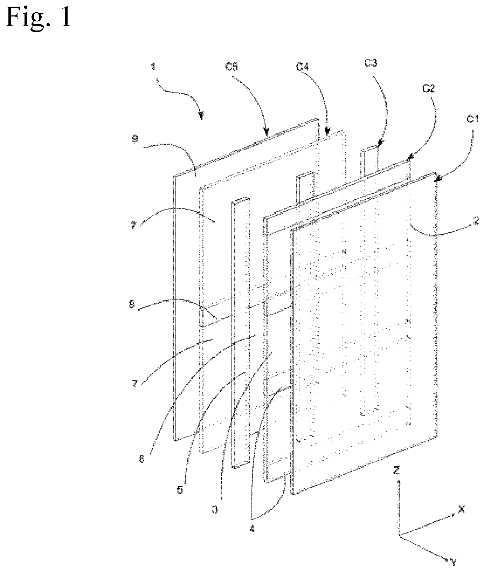

Dans les exemples de réalisation illustrés, les éléments ou parties identiques portent les mêmes numéros de référence. En outre, les termes qui ont un sens relatif, tels que vertical, horizontal, droite, gauche, intérieur, extérieur, au-dessus, en-dessous, etc. doivent être interprétés dans des conditions normales d'utilisation de l'invention, c'est-à-dire lorsque le panneau est monté pour former un mur vertical, et telles que représentées sur les figures. Les axes X, Y et Z sont quant à eux définis par un repère orthonormé illustré à la figure 1.

En référence aux figures, le panneau 1 en bois préfabriqué selon l'invention comporte une structure multicouche comportant dans l'ordre suivant au moins :
- une première couche C1 constituée d'une plaque de bois 2 massive,
- une deuxième couche C2 constituée de plaques ou de bandes de matériau thermiquement isolant 3 intercalées entre des lisses 4 parallèles, s'étendant dans une première direction, qui est horizontale selon l'axe X lorsque le panneau 1 est monté pour former un mur vertical,
- une troisième couche C3 constituée d'entretoises 5 parallèles, s'étendant dans une seconde direction perpendiculaire à la première direction, qui est une direction verticale selon l'axe Z, pour créer des canaux 6 traversants entre les entretoises 5,
- une quatrième couche C4 constituée de plaques ou de bandes de matériau thermiquement isolant 7 intercalées entre des lisses 8 parallèles s'étendant dans ladite première direction, et
- une cinquième couche C5 constituée d'une plaque de bois massive 9.

Le nombre de couches formant le panneau 1 peut différer en fonction du cahier de charges. Toutefois, le panneau 1 de l'invention tel qu'il est décrit et représenté dans les figures avec cinq couches C1 à C5 est la forme de réalisation préférée de l'invention, qui permet d'atteindre les buts fixés, à savoir un panneau 1 fini, autoportant, complet et prêt à poser.

Le panneau 1 selon l'invention peut être fabriqué selon un procédé de fabrication connu, similaire à la technique de fabrication d'un panneau lamellé-collé ou lamellé-collé-croisé (CLT). Les couches C1 à C5 de la structure multicouche sont déposées dans l'ordre de la première couche C1 à la cinquième couche C5 ou inversement de la cinquième couche C5 à la première couche C1 sur une table de presse. Une couche de colle est déposée entre chaque couche, c'est-à-dire sur chacune des couches déposées avant de déposer la couche suivante. La structure multicouche est ensuite mise sous pression, pour lier les couches C1 à C5 entre elles et former un panneau 1 en bois préfabriqué, fini et prêt à poser. Ce procédé de fabrication ne requiert ainsi aucune fixation mécanique.

La colle utilisée dans le cadre de l'invention peut être une colle connue, utilisée dans la fabrication d'un panneau lamellé-collé ou lamellé-collé-croisé (CLT), telle qu'à titre d'exemple une colle à base de polyuréthane qui durcit à froid. Il s'agit d'une colle élastomère à hautes performances mécaniques et résistante à l'eau, très largement utilisées dans différents domaines techniques dont l'industrie du bois. Bien entendu, toute autre colle similaire peut convenir et notamment une colle à base de phénol-résorcine-formaldéhyde (PRF), d'émulsion de polymère iso-cyanate (EPI), voire une colle naturelle et biodégradable avec ou sans latex naturel. En outre, la colle utilisée entre dans la composition du panneau 1 à très faible pourcentage et par exemple à hauteur de 0,2% sans que cet exemple ne soit limitatif. Cette quantité de colle est donc insignifiante et n'interdit pas le recyclage du panneau et de ses déchets. Notamment, les morceaux de panneau issus de découpes peuvent être 100% recyclés et transformés en panneau à base de sciure, de particules ou similaires, en pellets ou plaquettes pour le chauffage, etc.

Les presses utilisées pour ce type de fabrication sont connues et ne seront pas décrites dans la présente demande. La pression d'assemblage peut être par exemple de l'ordre de 6 bars, sans que cet exemple ne soit limitatif. Les presses utilisées ont l'avantage de permettre la fabrication de panneaux 1 de grandes dimensions, par exemple 20 mètres de long sur 4 mètres de large, sans que cet exemple ne soit limitatif. Ainsi, il est particulièrement avantageux de fabriquer des panneaux 1 dont les dimensions en longueur et en largeur correspondent à celles de murs entiers de bâtiments, dans la limite du transportable. Il est bien entendu possible de limiter les dimensions des panneaux 1 au gabarit routier autorisé pour éviter un transport sur route en convoi exceptionnel, par exemple 16 mètres en longueur sur 2,55 mètres en largeur, et pour limiter le poids des panneaux à manutentionner.

Après fabrication et si nécessaire, le panneau 1 peut être découpé sur mesure en atelier par des machines à commande numérique. Ainsi, les ouvertures dans le panneau 1 destinées à former une fenêtre, une porte, une baie ou similaire peuvent être réalisées lors de cette étape. De fait, les panneaux 1 ainsi fabriqués arrivent sur le chantier, prêts à être assemblés à l'aide d'une grue. Ils permettent donc des chantiers secs, rapides et précis, sans déchets, ce qui se traduit en économie de temps et de coût. Leur légèreté (4 fois moins lourd que le béton) permet de réduire le dimensionnement des fondations, de construire en zone sismique ou encore d'envisager avec facilité des bâtiments à plusieurs étages.

Les première et cinquième couches C1 et C5 forment la structure portante et le contreventement du panneau 1 et sont constituées chacune d'une plaque de bois 2 et 9 massive. La plaque de bois 2, 9 de chacune des première et cinquième couches C1 et C5 peut être choisie dans le groupe comprenant tout type de plaque de structure ayant une fonction de voile de contreventement, tel qu'une planche de bois brute, une plaque d'OSB (Oriented Strand Board), une plaque de fibres de bois collées type AGEPAN^{®} ou similaire, une plaque de particules de bois agglomérées, une plaque de bois lamellé-collé, une plaque de bois lamellé-collé-croisé (CLT - Cross Laminated Timber) ou tout type de plaques à plis croisés. De manière avantageuse, l'une au moins des plaques 2 et 9 des première et cinquième couches C1 et C5 peut être constituée d'une plaque CLT, par exemple à trois plis, sans que cet exemple ne soit limitatif. Si les deux plaques 2 et 9 sont constituées d'une plaque CLT, l'épaisseur des plis et le nombre de plis constituant chaque plaque de bois 2, 9 peuvent être variables et définis en fonction d'un cahier des charges. A titre d'exemple, ces plaques 2, 9 peuvent comporter chacune trois plis de 9mm, soit une épaisseur de plaque totale de 27mm, ces valeurs n'étant pas limitatives. En outre, les plaques de bois 2, 9 des première et cinquième couches C1 et C5 peuvent être identiques ou non, de même épaisseur ou non, de même nature ou non.

Les faces visibles des plaques de bois 2, 9 des première et cinquième couches C1 et C5 peuvent présenter différents aspects de surface, selon que ces faces sont des faces intérieures ou extérieures au bâtiment, et selon qu'elles forment des parements lisses ou structurés. Par exemple la couche C1 du panneau 1 est destinée à être située à l'extérieur du bâtiment et la couche C5 est destinée à être située à l'intérieur dudit bâtiment. Le panneau 1 n'est pas prévu pour recevoir un revêtement intérieur et/ou extérieur, puisque les plaques de bois 2, 9 en CLT forment une surface finie, étanche à l'air naturellement, sans qu'il y ait besoin d'ajouter un quelconque pare-vapeur issu de la pétrochimie ou de ses dérivés. Dans certains cas, pour rendre la couche C1 totalement étanches à l'eau et à l'air, il est possible d'ajouter sur la plaque de bois 2 un revêtement extérieur sous la forme d'une membrane liquide sans solvant et sous avis technique pour garantir une protection contre les intempéries, et ce même en phase de chantier.

Les deuxième et quatrième couches C2 et C4 forment la structure isolante du panneau 1 et sont constituées chacune de matériau isolant 3, 7 intercalé entre des lisses 4, 8. Le matériau thermiquement isolant 3, 7 peut être constitué d'un ou de plusieurs matériaux, choisis dans le groupe comprenant la laine de bois, la laine de roche, le polystyrène extrudé, la mousse de polyuréthane, le liège, ou similaire, et la combinaison de ces matériaux. Il peut se présenter sous la forme de plaques ou de bandes planes, d'épaisseur sensiblement égale à l'épaisseur des lisses 4, 8, et de forte densité. Préférentiellement, on choisira des plaques de laine de bois d'une densité d'environ 160 kg/m², sans que cet exemple ne soit limitatif. Une forte densité des plaques ou bandes de matériau isolant 3, 7 est importante car elle permet d'éviter l'écrasement de la matière isolante sous la presse lors de l'assemblage du panneau 1 qui aurait une incidence négative sur le coefficient thermique du panneau 1.

Les lisses 4, 8 intercalées entre les plaques ou bandes de matériau isolant 3, 7 déterminent l'épaisseur des deuxième et quatrième couches C2 et C4, et donc l'épaisseur d'isolant. Les deuxième et quatrième couches C2 et C4 peuvent avoir une épaisseur égale ou différente, selon le cahier des charges. Les lisses 4, 8 sont préférentiellement positionnées horizontalement selon l'axe X, lorsque le panneau 1 forme un mur extérieur ou une cloison intérieur. En outre, les lisses 4 de la deuxième couche C2 ne sont pas situées au même niveau selon l'axe Z des lisses 8 de la quatrième couche C4, et sont décalées les unes par rapport aux autres. Cette disposition alternée des lisses 4, 8 a l'avantage de limiter, voire de supprimer les ponts thermiques au droit des intersections entre les lisses 4, 8 et les entretoises 5 de la troisième couche C3. Les lisses 4, 8 ont de préférence une section carrée ou rectangulaire, et peuvent être choisies dans le groupe comprenant des tasseaux de bois brut, de bois massif abouté, de bois contrecollé, de bois lamellé-collé, ou similaire. Dans l'exemple représenté, la deuxième couche C2, qui suit la première couche C1 destinée à être située à l'extérieur du bâtiment, comporte quatre lisses 4 et trois plaques de matériau isolant 5. Les quatre lisses 4 sont réparties régulièrement sur la longueur de la première couche C1, les première et quatrième lisses 4 étant alignées avec les bords des extrémités inférieure et supérieure de la plaque de bois 2 de la première couche C1. Dans l'exemple représenté, la quatrième couche C4, qui précède la cinquième couche C5 destinée à être située à l'intérieur du bâtiment, comporte une seule lisse 8 située au centre et deux plaques de matériau isolant 7 situées de part et d'autre de la lisse 8 centrale. Ainsi, la lisse 8 de la quatrième couche C4 est positionnée entre les deuxième et troisième lisses 4 de la deuxième couche C2. Ces exemples ne sont pas limitatifs. En effet, le nombre de lisses 4, 8 ainsi que leur répartition, qui peut être régulière ou non, dans les deuxième et quatrième couches C2 et C4 du panneau 1, et respectivement la quantité de matière isolante 3, 7, peuvent varier en fonction du cahier des charges. La deuxième couche C2, destinée à être orientée vers l'extérieur du bâtiment, peut notamment comporter un nombre de lisses 4 supérieur au nombre de lisses 8 de la quatrième couche C4, destinée à être orientée vers l'intérieur du bâtiment, conformément à l'exemple représenté. Cet exemple n'est toutefois pas limitatif et d'autres agencements peuvent convenir selon le cahier des charges.

La troisième couche C3 forme le vide technique du panneau 1 et est constituée d'entretoises 5 délimitant entre elles des canaux 6 vides et traversants. Les entretoises 5 sont disposées selon une orientation différente de celle des lisses 4, 8 pour créer une structure quadrillée en trois dimensions. Les entretoises 5 sont préférentiellement positionnées verticalement selon l'axe Z, lorsque le panneau 1 forme un mur extérieur ou une cloison intérieure. Elles déterminent l'épaisseur de la troisième couche C3, et donc l'épaisseur des canaux 6. Cette épaisseur est variable en fonction du cahier des charges. Dans l'exemple représenté, la troisième couche C3 comporte trois entretoises 5, réparties régulièrement sur la largeur de la deuxième couche C2, les première et troisième entretoises 5 étant alignées avec les bords des extrémités latérales de la deuxième couche C2. Les entretoises 5 ont de préférence une section carrée ou rectangulaire, et peuvent être choisies dans le groupe comprenant des tasseaux de bois brut, de bois massif abouté, de bois contrecollé, de bois lamellé-collé, ou similaire.

La structure multicouche du panneau 1 étant assemblée par collage, les canaux 6 créés au centre du panneau 1, dans la troisième couche C3, ont l'avantage d'être intrinsèquement étanches à l'air. Les canaux 6 forment ainsi un vide technique régulier et axial à l'intérieur du panneau 1, qui reste vide et accessible car il n'est jamais comblé par un matériau isolant. Les canaux 6 permettent, durant toute la durée de vie du panneau 1, de pouvoir intégrer des réseaux techniques sans devoir démonter ou usiner ledit panneau 1. Par ce principe, il est possible de modifier ou de recycler une paroi sans devoir consommer de nouveaux matériaux ou engendrer des travaux conséquents. Du fait également de l'accès à cette strate centrale du panneau 1 par ses extrémités, il est possible de passer les réseaux électriques directement en câblé et donc de ne plus utiliser de gaines plastiques. Ceci représente un avantage précieux pour l'environnement. En effet, la règle du retirage impose que « les conducteurs ou câbles doivent pouvoir être remplacés en cas de défaillance de l'un d'eux. Par conséquent, lorsque les câbles sont encastrés dans des parois, ils doivent être placés dans une gaine plastique ». Or grâce à la conception particulière du panneau 1 de l'invention, les câbles sont certes disposés dans une paroi mais restent accessibles car ladite paroi est composée d'un vide régulier qui permet d'identifier précisément où sont disposés les réseaux techniques et de les canaliser à l'intérieur des canaux 6 formés entre les d'entretoises 5 de la troisième couche C3.

Le montage sur chantier des panneaux 1 selon l'invention peut être réalisé en assemblant entre eux les différents panneaux 1 par des systèmes de tirefonds et de visseries divers. Il est possible d'utiliser la même technique d'assemblage que celle utilisée pour le montage des panneaux en CLT, qui est connue et ne sera pas décrite dans la présente demande. Les panneaux 1 à assembler peuvent être identiques ou non en fonction de leur utilisation en murs extérieurs, cloisons intérieures, planchers, toitures, balcon, etc. Notamment, les épaisseurs et/ou la composition des couches C1 à C5 peuvent varier pour s'adapter au cahier des charges de chaque partie de la construction.

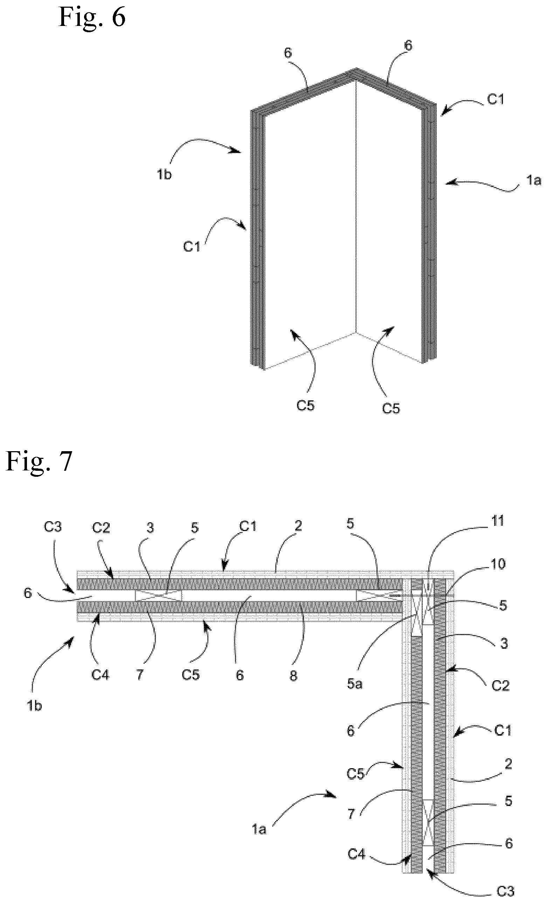

Pour illustrer une des techniques d'assemblage, les figures 6 et 7 montrent un exemple d'assemblage de deux panneaux 1a, 1b identiques, pour former un angle droit entre deux murs d'un bâtiment. L'angle est réalisé en emboitant l'extrémité latérale d'un des panneaux 1a dans l'extrémité latérale de l'autre panneau 1b. A cet effet, l'extrémité latérale du panneau 1b est évidée sur une largeur correspondant à la largeur du panneau 1a. Plus exactement, on découpe une partie des couches C2 à C5 du panneau 1b pour dégager une zone d'emboîtement en forme de L. L'extrémité latérale du panneau 1a est en outre complétée par une entretoise 5a, qui a été ajoutée dans la quatrième couche C4 pour se superposer au moins en partie à l'entretoise 5 d'extrémité de la troisième couche C3. L'assemblage des deux panneaux 1a, 1b s'effectue d'un côté de l'angle par des tirefonds 10 ou similaires, qui traversent le panneau 1a et pénètrent dans la tranche du panneau 1b en se vissant dans les différentes entretoises 5, 5a. Des vis 11 peuvent compléter cet assemblage en se vissant de l'autre côté de l'angle à travers la plaque de bois 2 de la première couche C1 du panneau 1b et dans l'entretoise 5 d'extrémité du panneau 1a. L'entretoise 5a peut être ajoutée dans le panneau 1a directement lors de l'assemblage des couches C1 à C5 dans la presse, ou lors d'une étape spécifique après la fabrication du panneau 1a.

Grâce à la conception du panneau 1 selon l'invention, la préfabrication industrielle en usine du panneau 1 est complète, puisqu'elle comprend les parements, la structure portante, les solutions d'étanchéité, et le vide technique, qui sont assemblés de manière industrielle, en collant sous presse toutes les couches C1 à C5. De manière avantageuse, l'intégralité des matériaux de la structure portante et de l'isolation peut être en bois exclusivement, ou en bois combiné à d'autres fibres naturelles, c'est-à-dire des matériaux biosourcés pour des questions environnementales et de recyclage. En effet, les panneaux en CLT sont d'excellents puits de carbone. En outre, tous les déchets produits sont en bois, avec ou sans fibres naturelles additionnelles, donc facilement recyclables en totalité, pour produire des pellets ou similaires. On obtient des panneaux 1 de construction finis, étanches et propres, qui comportent une protection extérieure durable dans le temps, sans utiliser des matériaux plastiques ou ne respectant pas la nature. Ils apportent en outre une réponse efficace à la problématique de l'étanchéité à l'air du fait de la continuité des parois. La pose d'un frein-vapeur peut être superflue. La préfabrication industrielle permet également d'anticiper les ouvertures, sans compromettre les qualités structurelles et thermiques des panneaux 1.

En résumé, le panneau 1 selon l'invention constitue à lui seul un système constructif complet et compétitif face aux autres systèmes constructifs. Une étude thermique du panneau 1 confirme qu'il répond à la norme RT 2012 en vigueur avec une épaisseur totale de seulement 17,40 cm (C1 et C5 : plaques CLT de 27mm ; C2 et C4 : laine de bois de 40mm ; C3 : vide technique de 40mm). Il permet en effet d'obtenir un coefficient de transmission thermique de U= 0.26 W/(m².K) soit une valeur de résistance thermique de R=3.85 (m².K)/W. Il pourra atteindre sans difficulté la norme RT 2020 en augmentant légèrement l'épaisseur de l'isolation des couches C2 et C4,

La présente invention n'est bien entendu pas limitée aux exemples de réalisation décrits mais s'étend à toute modification et variante évidentes pour un homme du métier dans la limite des revendications annexées.

## Revendications

1. Panneau (1) en bois préfabriqué pour la construction de bâtiments, ledit panneau comportant une structure multicouche assemblée par collage sous presse, lequel panneau (1) qu'il comporte dans l'ordre :
- une première couche (C1) constituée d'une plaque de bois (2) massive,
- une deuxième couche (C2) constituée d'un matériau thermiquement isolant (3) en forme de plaques ou de bandes plates, intercalé entre des lisses (4) parallèles, s'étendant dans une première direction,
- une troisième couche (C3) constituée d'entretoises (5) parallèles, s'étendant dans une seconde direction perpendiculaire à la première direction, pour créer des canaux (6) entre les entretoises (5),
- une quatrième couche (C4) constituée d'un matériau thermiquement isolant (7) en forme de plaques ou de bandes plates, intercalé entre des lisses (8) parallèles s'étendant dans ladite première direction,
- une cinquième couche (C5) constituée d'une plaque de bois (9) massive,
et en ce que les lisses (4) de la deuxième couche (C2) et les lisses (8) de la quatrième couche (C4) sont parallèles entre elles et décalées les unes par rapport selon ladite seconde direction pour éviter les ponts thermiques, lesdites première et cinquième couches (C1, C5) sont agencées pour former la structure portante et le contreventement dudit panneau (1), lesdites deuxième et quatrième couches (C2, C4) sont agencées pour former la structure isolante dudit panneau (1), et ladite troisième couche (C3) est agencée pour former le vide technique dudit panneau (1), lesdits canaux (6) étant vides, traversants et agencés pour recevoir des réseaux techniques.

2. Panneau (1) selon la revendication 1, **caractérisé en ce que** ladite première direction des lisses (4, 8) de la deuxième couche (C2) et de la quatrième couche (C4) correspond à une direction sensiblement horizontale, lorsque ledit panneau (1) est disposé pour former un mur, et ladite seconde direction des entretoises (5) de la troisième couche (C3) correspond à une direction sensiblement verticale.

3. Panneau selon la revendication 1, **caractérisé en ce que** la plaque de bois (2) de la première couche (C1) et la plaque de bois (9) de la cinquième couche (C5) sont choisies chacune dans le groupe comprenant une planche de bois brute, une plaque d'OSB (Oriented Strand Board), une plaque de fibres de bois collées, une plaque de particules de bois agglomérées, une plaque de bois lamellé-collé, et de préférence une plaque de bois lamellé-collé-croisé (CLT Cross Laminated Timber).

4. Panneau (1) selon la revendication 1, **caractérisé en ce que** le matériau thermiquement isolant (3) de la deuxième couche (C2) et le matériau thermiquement isolant (7) de la quatrième couche (C4) sont choisis chacun dans le groupe comprenant la laine de bois, la laine de roche, le polystyrène extrudé, la mousse de polyuréthane, le liège, la combinaison d'au moins deux de ces matériaux.

5. Panneau (1) selon l'une quelconque des revendications précédentes, **caractérisé en ce que** les lisses (4) de la deuxième couche (C2) et les lisses (8) de la quatrième couche (C4) et les entretoises (5) de la troisième couche (C3) sont agencées pour définir l'épaisseur respectivement desdites deuxième et quatrième couches (C2, C4) et de la troisième couche (C3), et sont choisies chacune dans le groupe comprenant des tasseaux de bois brut, de bois massif abouté, de bois contrecollé, de bois lamellé-collé.

6. Panneau (1) selon la revendication 5, **caractérisé en ce que** lesdites lisses (4, 8) et lesdites entretoises (5) ont une même section.

7. Panneau (1) selon l'une quelconque des revendications précédentes, **caractérisé en ce qu'**il comporte au moins une ouverture choisie dans le groupe comprenant une fenêtre, une porte, une baie.

8. Procédé de fabrication d'un panneau (1) en bois préfabriqué selon l'une quelconque des revendications précédentes, **caractérisé en ce que**, sur une table de presse, l'on superpose les couches (C1 à C5) de ladite structure multicouche dans l'ordre de la première couche (C1) à la cinquième couche (C5) ou inversement de la cinquième couche (C5) à la première couche (C1), **en ce que** l'on dépose de la colle sur chacune des couches avant de déposer la couche suivante, et **en ce que** l'on met sous pression la structure multicouche pour lier les couches (C1 à C5) entre elles et former ledit panneau (1) en bois préfabriqué, fini et prêt à poser.

9. Procédé selon la revendication 8, **caractérisé en ce que** l'on découpe le panneau (1) obtenu après fabrication pour créer au moins une ouverture destinée à former une fenêtre, une porte, une baie.

10. Construction obtenue par assemblage de plusieurs panneaux (1) en bois préfabriqués selon l'une quelconque des revendications 1 à 9, **caractérisée en ce que** lesdits panneaux (1) forment tout ou partie des parois de ladite construction comprenant les murs extérieurs, les cloisons intérieures, les dalles de plancher, les supports de toiture.

11. Construction selon la revendication 10, **caractérisée en ce que** lesdits panneaux (1) sont assemblés entre eux par des tirefonds (10) et des vis (11).

## Patentansprüche

1. Vorgefertigtes Holzpaneel (1) für den Bau von Gebäuden, wobei das Paneel eine mehrschichtige Struktur aufweist, die durch Verkleben in einer Presse zusammengefügt wurde, wobei das Paneel (1) der Reihenfolge nach Folgendes umfasst:
- eine erste Schicht (C1), die aus einer Massivholzplatte (2) besteht,
- eine zweite Schicht (C2), die aus einem wärmedämmenden Material (3) in Form von Platten oder flachen Streifen besteht, wobei es zwischen parallelen Holmen (4) eingefügt ist, welche sich in einer ersten Richtung erstrecken,
- eine dritte Schicht (C3), die aus parallelen Querstreben (5) besteht, welche sich in einer zweiten Richtung erstrecken, die rechtwinklig zur ersten Richtung ist, um Kanäle (6) zwischen den Querstreben (5) zu schaffen,
- eine vierte Schicht (C4), die aus einem wärmedämmenden Material (7) in Form von Platten oder flachen Streifen besteht, wobei es zwischen parallelen Holmen (8) eingefügt ist, welche sich in der ersten Richtung erstrecken,
- eine fünfte Schicht (C5), die aus einer Massivholzplatte (9) besteht, wobei weiterhin die Holme (4) der zweiten Schicht (C2) und die Holme (8) der vierten Schicht (C4) zueinander parallel sind und gegeneinander gemäß der zweiten Richtung versetzt sind, um Wärmebrücken zu vermeiden, wobei die erste und die fünfte Schicht (C1, C5) derart angeordnet sind, dass sie die tragende Struktur und die Querverbindung des Paneels (1) bilden, wobei die zweite und die vierte Schicht (C2, C4) derart angeordnet sind, dass sie die Dämmstruktur des Paneels (1) bilden, und wobei die dritte Schicht (C3) derart angeordnet ist, dass sie den technischen Hohlraum des Paneels (1) bildet, wobei die Kanäle (6) hohl, durchgehend und derart angeordnet sind, dass sie technische Leitungen aufnehmen können.

2. Paneel (1) nach Anspruch 1, **dadurch gekennzeichnet, dass** die erste Richtung der Holme (4, 8) der zweiten Schicht (C2) und der vierten Schicht (C4) einer Richtung entspricht, die im Wesentlichen horizontal ist, wenn das Paneel (1) angeordnet wird, um eine Wand zu bilden, und die zweite Richtung der Querstreben (5) der dritten Schicht (C3) einer Richtung entspricht, die im Wesentlichen vertikal ist.

3. Paneel nach Anspruch 1, **dadurch gekennzeichnet, dass** die Holzplatte (2) der ersten Schicht (C1) und die Holzplatte (9) der fünften Schicht (C5) jeweils aus der Gruppe ausgewählt sind, die ein Rohholzbrett, eine Grobspanplatte (OSB, Oriented Strand Board), eine Holzfaserplatte, eine Flachpressplatte, eine Sperrholzplatte umfasst, wobei es sich vorzugsweise um eine Brettsperrholzplatte (CLT, Cross-laminated Timber) handelt.

4. Paneel (1) nach Anspruch 1, **dadurch gekennzeichnet, dass** das Wärmedämmmaterial (3) der zweiten Schicht (C2) und das Wärmedämmmaterial (7) der vierten Schicht (C4) jeweils aus der Gruppe ausgewählt sind, die Holzwolle, Steinwolle, extrudiertes Polystyrol, Polyurethanschaum, Kork, Kombinationen aus mindestens zwei dieser Materialien umfasst.

5. Paneel (1) nach einem beliebigen der vorhergehenden Ansprüche, **dadurch gekennzeichnet, dass** die Holme (4) der zweiten Schicht (C2) und die Holme (8) der vierten Schicht (C4) und die Querstreben (5) der dritten Schicht (C3) derart angeordnet sind, dass sie die Dicke der zweiten und vierten Schicht (C2, C4) beziehungsweise der dritten Schicht (C3) festlegen, wobei sie jeweils aus der Gruppe ausgewählt sind, die Leisten aus Rohholz, aus aneinandergefügtem Massivholz, aus Furnierschichtholz, aus Brettschichtholz umfasst.

6. Paneel (1) nach Anspruch 5, **dadurch gekennzeichnet, dass** die Holme (4, 8) und die Querstreben (5) denselben Querschnitt aufweisen.

7. Paneel (1) nach einem beliebigen der vorhergehenden Ansprüche, **dadurch gekennzeichnet, dass** es mindestens eine Öffnung aufweist, die aus der Gruppe ausgewählt ist, welche ein Fenster, eine Tür, einen Einbauplatz umfasst.

8. Verfahren zur Herstellung eines vorgefertigte Holzpaneels (1) nach einem beliebigen der vorhergehenden Ansprüche, **dadurch gekennzeichnet, dass** auf einem Pressentisch die Schichten (C1 bis C5) der mehrschichtigen Struktur der Reihenfolge nach von der ersten Schicht (C1) bis zur fünften Schicht (C5), oder umgekehrt von der fünften Schicht (C5) bis zur ersten Schicht (C1), angeordnet werden, und dadurch, dass auf jede der Schichten Klebstoff aufgebracht wird, bevor die nachfolgende Schicht aufgelegt wird, und dadurch, dass auf die mehrschichtige Struktur ein Druck einwirken gelassen wird, um die Schichten (C1 bis C5) miteinander zu verbinden, sodass das vorgefertigte Holzpaneel (1) gebildet wird, welches das einsatzbereite Endprodukt darstellt.

9. Verfahren nach Anspruch 8, **dadurch gekennzeichnet, dass** das Paneel (1), welches infolge der Herstellung erhalten wurde, einem Schneidevorgang unterzogen wird, um mindestens eine Öffnung zu schaffen, die dazu bestimmt ist, ein Fenster, eine Tür, einen Einbauplatz zu bilden.

10. Bauwerk, das erhalten wurde, indem mehrere vorgefertigte Holzpaneele (1) nach einem beliebigen der Ansprüche 1 bis 9 zusammengefügt wurden, **dadurch gekennzeichnet, dass** die Paneele (1) die Gesamtheit oder einen Abschnitt der flächigen Elemente des Bauwerks bilden, wobei dazu Außenwände, Innenwände, Deckenplatten und Dachstützelemente gehören.

11. Bauwerk nach Anspruch 10, **dadurch gekennzeichnet, dass** die Paneele (1) mittels Schlüsselschrauben (10) und Schrauben (11) zusammengefügt werden.

## Claims

1. Prefabricated wood panel (1) for the construction of buildings, said panel comprising a multilayer structure assembled by press bonding, which panel (1) comprises in order:
- a first layer (C1) consisting of a solid wooden board (2),
- a second layer (C2) consisting of a thermally insulating material (3) in the form of boards or flat strips, interposed between parallel ribs (4), extending in a first direction,
- a third layer (C3) consisting of parallel spacers (5), extending in a second direction perpendicular to the first direction, to create channels (6) between the spacers (5),
- a fourth layer (C4) consisting of a thermally insulating material (7) in the form of boards or flat strips, interposed between parallel ribs (8), extending in said first direction,
- a fifth layer (C5) consisting of a solid wooden board (9), and in that the ribs (4) of the second layer (C2) and the ribs (8) of the fourth layer (C4) are parallel to one another and offset against one another, in said second direction to avoid thermal bridges, said first and fifth layers (C1, C5) are arranged to form the bearing structure and the bracing of said panel (1), said second and fourth layers (C2, C4) are arranged to form the insulating structure of said panel (1), and said third layer (C3) is arranged to form the technical vacuum of said panel (1), said channels (6) being empty, through-going and arranged to receive technical networks.

2. Panel (1) according to claim 1, **characterised in that** said first direction of the ribs (4, 8) of the second layer (C2) and of the fourth layer (C4) corresponds to a substantially horizontal direction, when said panel (1) is disposed to form a wall, and said second direction of the spacers (5) of the third layer (C3) corresponds to a substantially vertical direction.

3. Panel according to claim 1, **characterised in that** the wooden board (2) of the first layer (C1) and the wooden board (9) of the fifth layer (C5) are each chosen from the group comprising a raw wooden plank, an OSB (oriented strand board), a glued wood fibre board, a chipboard, a glulam board, and preferably a cross-laminated timber (CLT) board.

4. Panel (1) according to claim 1, **characterised in that** the thermally insulating material (3) of the second layer (C2) and the thermally insulating material (7) of the fourth layer (C4) are each chosen from the group comprising wood wool, rock wool, extruded polystyrene, polyurethane foam, cork, the combination of at least two of these materials.

5. Panel (1) according to any one of the preceding claims, **characterised in that** the ribs (4) of the second layer (C2) and the ribs (8) of the fourth layer (C4) and the spacers (5) of the third layer (C3) are arranged to define the thickness respectively of said second and fourth layers (C2, C4) and of the third layer (C3), and are each chosen from the group comprising raw wooden cleats, finger-jointed solid wood, engineering wood, glulam wood.

6. Panel (1) according to claim 5, **characterised in that** said ribs (4, 8) and said spacers (5) have one same cross-section.

7. Panel (1) according to any one of the preceding claims, **characterised in that** it comprises at least one opening chosen from the group comprising a window, a door, a bay.

8. Method for manufacturing a prefabricated wood panel (1) according to any one of the preceding claims, **characterised in that**, on a press table, the layers (C1 to C5) of said multilayer structure are superposed in the order of the first layer (C1) to the fifth layer (C5) or conversely, from the fifth layer (C5) to the first layer (C1), **in that** glue is deposited on each of the layers before placing the following layer, and **in that** the multilayer structure is pressurised to bond the layers (C1 to C5) to one another and form said prefabricated wood panel (1), finished and ready to place.

9. Method according to claim 8, **characterised in that** the panel (1) obtained after manufacture is cut, to create at least one opening intended to form a window, a door, a bay.

10. Construction obtained by assembling several prefabricated wood panels (1) according to any one of claims 1 to 9, **characterised in that** said panels (1) form all or some of the walls of said construction comprising the outer walls, the inner partitions, the floor slabs, the roof supports.

11. Construction according to claim 10, **characterised in that** said panels (1) are assembled to one another by lag screws (10) and screws (11).
